# FASCICULE DE BREVET EUROPEEN

(11) **EP 0 603 368 B1**
(45) Date de publication et mention de la délivrance du brevet: **14.08.1996**
(21) Numéro de dépôt: 93914787.2
(22) Date de dépôt: 30.06.1993
(51) Int. Cl.: F02M 25/07, F16L 47/00

(54) **DISPOSITIF POUR ADAPTER UN ELEMENT CHAUD SUR UN CORPS CREUX EN MATIERE THERMOPLASTIQUE COMPORTANT AU MOINS UNE ARRIVEE DE FLUIDE FROID, ET CORPS CREUX COMPORTANT UN TEL DISPOSITIF**
EINRICHTUNG ZUR VERBINDUNG EINES HEISSEN ROHRES MIT EINER AUS THERMOPLASTISCHEM MATERIAL HERGESTELLTEN KALTEN KAMMER
DEVICE FOR FITTING A HEATED MEMBER TO A HOLLOW BODY MADE OF A THERMOPLASTIC MATERIAL AND COMPRISING AT LEAST ONE COLD FLUID INLET, AND HOLLOW BODY PROVIDED THEREWITH

(30) Priorité: 01.07.1992 FR 9208104
(43) Date de publication de la demande: 29.06.1994
(73) Titulaire: ORBEY PLASTIQUES ET INDUSTRIES, F-78140 Velizy (FR)
(72) Inventeur: VAUDRY, Jean-Paul, F-68770 Ammerschwihr (FR)
(74) Mandataire: Nuss, Laurent
(86) Numéro de dépôt international: FR9300662
(87) Numéro de publication internationale: WO9401673

(56) Documents cités:
- EP-A- 0 445 909
- EP-A- 0 486 338
- DE-A- 2 925 495
- US-A- 3 612 584

## Description

La présente invention concerne un corps creux comportant au moins une tubulure d'arrivée d'un fluide froid et au moins une tubulure de sortie de fluide, ainsi qu'un dispositif pour adapter un élément chaud sur ce corps creux, ledit corps creux étant réalisé en une matière thermoplastique qui ne peut pas supporter la température de l'élément chaud.

On sait que les corps creux en matière thermoplastique sont utilisés dans des domaines techniques de plus en plus nombreux et variés. En effet, ces corps creux sont en général de fabrication simple et économique et peuvent présenter une certaine résistance mécanique prédéterminée. Les techniques de fabrication disponibles, permettent de réaliser des corps de formes compliquées. Ces corps sont en outre légers, et présentent des caractéristiques intéressantes d'isolation électrique, thermique et phonique. Ils concurrencent ainsi de plus en plus les corps creux en alliage léger, qui sont nettement plus coûteux.

On sait par contre que ces corps creux présentent une limitation importante concernant la température à laquelle ils peuvent être soumis, notamment ponctuellement, sans perdre leurs caractéristiques mécaniques.

On considère en général que l'adaptation sur un corps creux en matière thermoplastique d'un élément chaud dont la température ne peut pas être supportée par ladite matière thermoplastique exigerait des solutions dont le coût annulerait l'avantage économique d'une réalisation en matière thermoplastique par rapport à la réalisation du même corps creux en alliage léger. En outre, les utilisateurs éventuels craignent un manque de fiabilité à l'usage d'une telle adaptation.

On connaît d'après le EP-A-0 486 338, un dispositif de recirculation de gaz d'échappement d'un moteur à combustion interne, du type comprenant une conduite de recirculation des gaz du collecteur d'échappement au collecteur d'admission. Ce dernier est réalisé en matériau composite. La partie d'embout de la conduite de recirculation raccordée au collecteur d'admission en débouchant dans celui-ci comprend une double paroi définissant une chambre annulaire qui isole thermiquement la paroi du collecteur d'admission de la paroi interne de la partie d'embout.

La partie d'embout débouche en aval du volet d'admission d'air dans le collecteur d'admission à proximité de celui-ci, et la chambre annulaire est en communication de fluide d'une part avec le collecteur d'admission et d'autre part avec un circuit d'air de réglage du ralenti du moteur de façon que l'air de ralenti circulant au travers de la chambre annulaire refroidisse la paroi du collecteur d'admission en contact avec la paroi externe de la partie d'embout.

Cette structure est relativement complexe et onéreuse. En outre, le débit d'air de réglage du ralenti est sensiblement constant quel que soit le régime du moteur, et ne peut guère varier en fonction du débit de gaz d'échappement recyclé.

Le but de la présente invention est de remédier aux inconvénients ci-dessus, et de proposer un corps creux du type précité qui soit de structure simple et économique et d'utilisation facile tout en étant extrêmement fiable.

Le corps creux selon l'invention est ainsi un corps creux comportant au moins une tubulure d'arrivée d'un fluide froid et au moins un tubulure de sortie de fluide, ainsi qu'un dispositif pour adapter un élément chaud sur ledit corps creux, ledit corps creux étant réalisé en une matière thermoplastique qui ne peut pas supporter la température de l'élément chaud, le dispositif comportant un manchon d'arrivée qui entoure ledit élément chaud, qui est fixé au corps creux et débouche dans celui-ci par une ouverture, et qui est également réalisé en une matière thermoplastique, des moyens de retenue pour maintenir l'élément chaud à l'intérieur du manchon d'arrivée hors de contact avec celui-ci, des moyens d'étanchéité disposés entre la surface périphérique extérieure de l'élément chaud et la surface périphérique intérieure du manchon, et des moyens pour refroidir l'espace compris entre le manchon et l'élément chaud.

Suivant l'invention, ce corps creux est caractérisé en ce que le manchon d'arrivée est séparé de la tubulure, ou des tubulures, d'arrivée de fluide froid, en ce que l'espace compris entre la surface périphérique extérieure de l'élément chaud et la surface périphérique intérieure du manchon est un espace en cul-de-sac, en ce que le corps creux comporte en outre des moyens pour envoyer dans l'espace en cul-de-sac, par l'ouverture, depuis l'intérieur du corps creux, une partie du fluide froid ayant pénétré dans le corps creux par ladite tubulure, et en ce que l'espace a une dimension prédéterminée telle que ladite partie du fluide froid assure un refroidissement correct de la tubulure et des moyens de retenue.

La présence du fluide froid dans l'espace compris entre le manchon et l'élément chaud est suffisante pour réduire les échanges de chaleur directs par conduction et par convection entre l'élément chaud et le manchon, et ceux assurés par les moyens de guidage et de retenue, d'une part, par les moyens d'étanchéité d'autre part. La température de la matière thermoplastique ne dépasse ainsi en aucun point un seuil de sécurité prédéterminé.

L'adaptation de l'élément chaud sur le corps creux est ainsi possible de manière très simple, économique et fiable.

En effet, les moyens de l'invention ne viennent pas compliquer la réalisation du corps creux en matière thermoplastique, et sont des moyens connus en eux-mêmes qui peuvent être adaptés à chaque cas particulier de manière à ne pas diminuer la fiabilité du dispositif de l'invention.

Suivant une version intéressante de l'invention, l'élément chaud est une tubulure d'arrivée de fluide chaud à l'intérieur du corps creux, la matière thermoplastique du corps creux étant capable de supporter la température du mélange des fluides froid et chaud.

Suivant une version avantageuse de l'invention, ce corps creux est un collecteur d'admission d'air pour moteur à explosion, comportant au moins une tubulure d'arrivée d'air frais et plusieurs tubulures de sortie d'air adaptées à diriger de l'air vers les différents cylindres du moteur.

Suivant une version préférée de l'invention, ledit collecteur reçoit au moins une tubulure d'arrivée de gaz d'échappement chauds recyclés.

D'autres particularités et avantages de l'invention apparaîtront dans la description détaillée ci-après.

Aux dessins annexés, donnés uniquement à titre d'exemples non limitatifs :
- la figure 1 est une vue de dessus, partiellement en coupe suivant I-I à la figure 2, d'un collecteur d'air d'admission de moteur à explosion conforme à l'invention équipé d'une tubulure de recyclage de gaz d'échappement ;
- la figure 2 est une vue en coupe, suivant II-II à la figure 1, du collecteur de la figure 1 équipé d'un dispositif conforme à un premier mode de réalisation de l'invention ;
- la figure 3 est une vue agrandie de détail du dispositif de la figure 2 ;
- la figure 4 est une vue de gauche du dispositif de la figure 3 ;
- la figure 5 est une vue semblable à la figure 2, le collecteur étant adapté à recevoir un dispositif conforme à un autre mode de réalisation de l'invention ;
- la figure 6 est une vue semblable à la figure 3 du dispositif adapté à équiper le collecteur de la figure 5 ;
- la figure 7 est une vue semblable à la figure 3 du dispositif conforme à un autre mode de réalisation de l'invention.

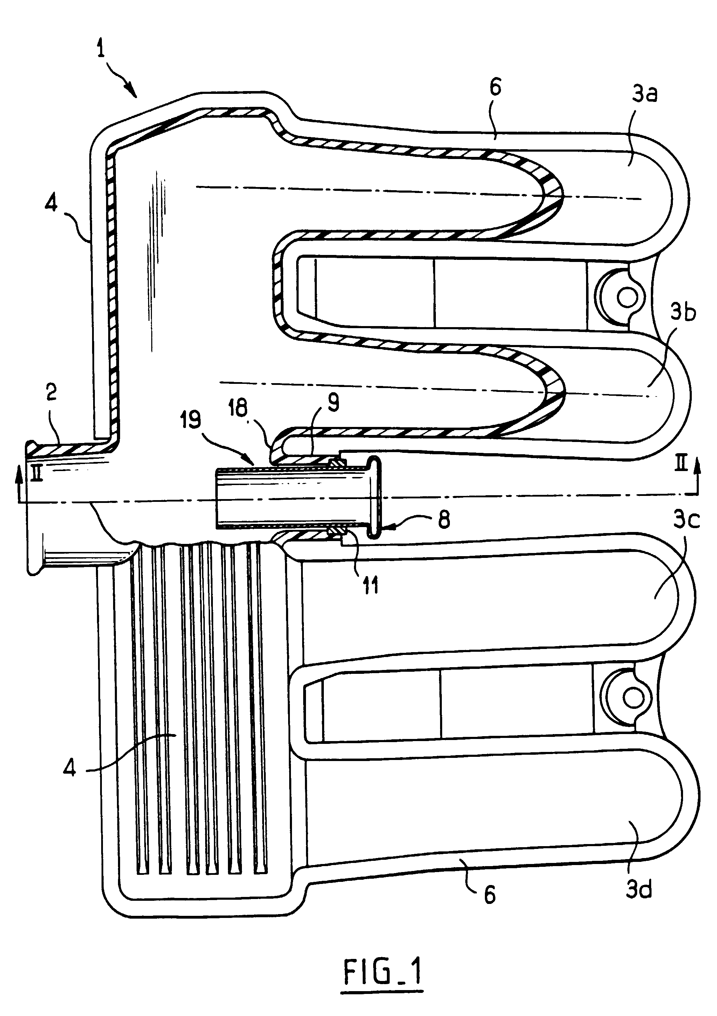

Dans la réalisation représentée à la figure 1, le collecteur 1 d'admission d'air pour moteur à explosion comporte de façon classique au moins une tubulure 2 d'arrivée d'air frais et plusieurs tubulures 3a, 3b, 3c, 3d, de sortie d'air adaptées à diriger de l'air vers les différents cylindres du moteur (non représentés).

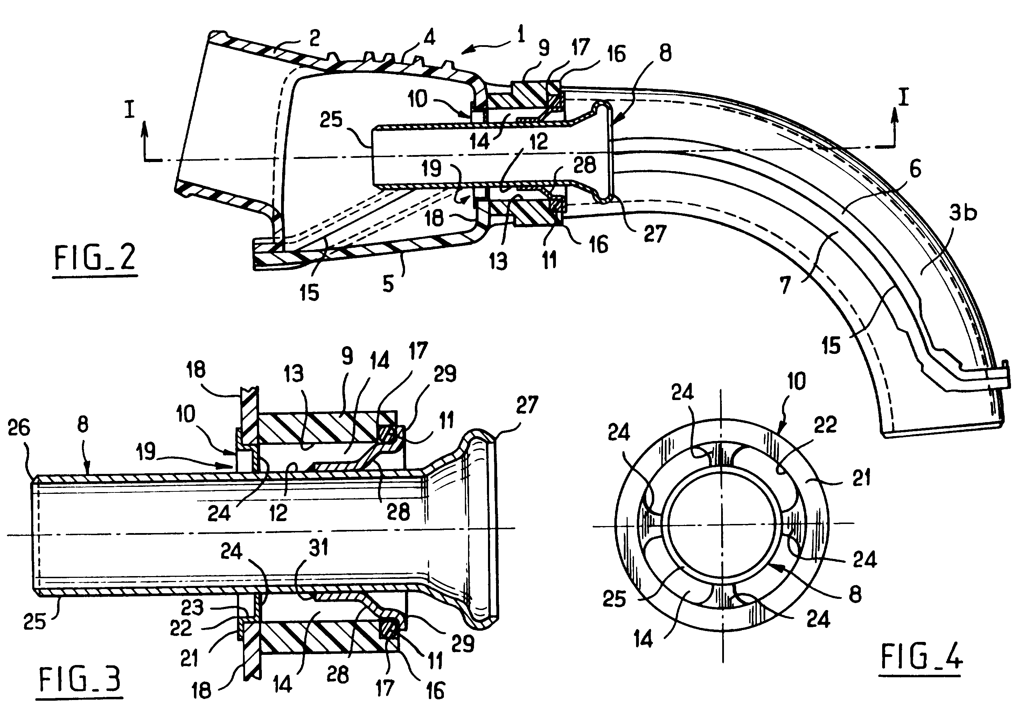

Dans cet exemple, le collecteur 1 est réalisé de façon connue à partir de deux demi-coquilles 4, 5, fabriquées par injection sous pression d'une matière thermoplastique et soudées l'une à l'autre, par exemple par soudure par vibrations, le long de leurs brides périphériques respectives 6, 7 (voir figure 2). La tubulure d'arrivée d'air 2 fait tout entière partie de la demi-coquille supérieure 4.

De façon également connue, la matière thermoplastique peut être un polyamide, par exemple du nylon 6-6 ou du nylon 6, chargé de fibres de verre, cette charge pouvant atteindre 30 à 50 % en poids de la matière thermoplastique. Cette matière peut également être du sulfure de polyphénilène (PPS) avec une charge de fibres de verre et/ou une charge minérale, ou toute autre matière thermoplastique adaptée à cette utilisation.

On sait que le PPS peut supporter sans problème une température de fonctionnement de 180° à 200°C, alors que le polyamide ne peut guère supporter une température supérieure à environ 120°C.

Suivant l'invention, le collecteur 1 reçoit au moins une tubulure 8 d'arrivée de gaz d'échappement chauds recyclés, cette tubulure 8 étant reliée par un conduit non représenté au circuit d'échappement du moteur.

On sait que les gaz d'échappement recyclés peuvent atteindre des températures de l'ordre de 300 à 500°C environ, suivant la distance séparant le collecteur d'échappement du point de prélèvement, et suivant la configuration du circuit qu'ils empruntent. On sait également que, suivant le type et le régime du moteur, le débit massique des gaz d'échappement recyclés peut varier de 0 à 50 % environ du débit massique total des gaz d'échappement émis par le moteur. La matière thermoplastique, quelle qu'elle soit, des demi-coquilles 4 et 5 ne peut supporter la température de ces gaz recyclés qui est celle de la tubulure 8.

Dans l'exemple représenté, la tubulure 8 est placée sensiblement dans le plan médian du collecteur 1, entre les deux groupes de tubulures de sortie 3a et 3b, d'un côté, 3c et 3d, de l'autre côté, sensiblement en face de la tubulure 2 d'arrivée de l'air froid. Cette disposition n'a aucun caractère critique et peut être remplacée par toute autre.

Dans la réalisation représentée aux figures 2 à 4, le dispositif de l'invention pour adapter la tubulure de recyclage 8 sur le collecteur 1 comporte un manchon d'arrivée 9 d'une seule pièce avec le collecteur 1 et destiné à entourer sans contact la tubulure 8, des moyens 10 de guidage et de retenue pour maintenir la tubulure 8 hors de contact avec le manchon d'arrivée 8 et la retenir à l'intérieur de celui-ci, des moyens d'étanchéité 11 entre la surface périphérique extérieure 12 de la tubulure 8 et la surface périphérique intérieure 13 du manchon 9, et des moyens pour faire circuler dans l'espace 14 compris entre le manchon 9 et la tubulure 8 au moins une partie de l'air froid pénétrant dans le collecteur 1.

Dans cet exemple, le manchon 9 se trouve à cheval sur la surface 15 de raccordement par soudure entre les deux demi-coquilles 4, 5, ce qui rend difficile sa réalisation en deux moitiés de cylindre respectivement d'une seule pièce avec les demi-coquilles 4 et 5 et assemblées par soudure par vibrations.

Dans la réalisation représentée aux figures 2 et 3, le manchon 9 est par exemple fabriqué par surmoulage sur le collecteur 1 déjà assemblé. Ce mode de réalisation permet ainsi, le cas échéant, de réaliser les deux demi-coquilles en une matière qui se soude très bien, par exemple un polyamide, et de fixer ensuite sur le collecteur 1 assemblé un manchon 9 en une matière thermoplastique résistant mieux à la température que le polyamide, par exemple le PPS.

Le manchon 9 présente, à son extrémité libre 16, un épaulement 17 servant de siège au joint d'étanchéité 11. Le joint 11 est en une matière connue résistant aux températures en jeu, par exemple en silicone, ou en des matériaux vendus sous les noms de VITON ou de VAMAC, qui sont des marques commerciales déposées, ou en d'autres matériaux appropriés.

Comme représenté en détail aux figures 3 et 4, les moyens de guidage et de retenue comprennent une rondelle 10 adaptée à prendre appui sur la paroi intérieure 18 du collecteur 1 le long du bord périphérique de l'ouverture 19 ménagée dans la paroi 18 et sur laquelle se raccorde le manchon 9, et comportant des griffes 24 en saillie radialement vers l'intérieur pour guider et retenir la tubulure 8.

La rondelle 10 présente ainsi une collerette externe 21 prenant appui sur la paroi 18, et dont le bord périphérique interne 22 forme un épaulement avec un tronçon axial 23 qui s'étend sur l'épaisseur de la paroi du collecteur 1, et qui se prolonge par quatre pattes 24 faisant office de griffes rabattues radialement vers l'intérieur. La rondelle 10 est de préférence réalisée d'une seule pièce dans une feuille mince d'un métal supportant les températures en jeu, par exemple de l'acier inoxydable : les griffes 24 sont ainsi capables de retenir élastiquement la tubulure 8 à l'intérieur du manchon 9.

La tubulure 8 a son extrémité 25 destinée à pénétrer à l'intérieur du collecteur 1 qui est chanfreinée en 26 pour pouvoir pénétrer facilement entre les griffes 24.

La seconde extrémité 27 de la tubulure 8 a une forme quelconque adaptée à être raccordée au conduit d'amenée des gaz d'échappement recyclés (non représenté), dans le présent exemple une forme évasée.

Comme représenté, la tubulure 8 présente sur sa surface périphérique extérieure, au niveau de son entrée dans le manchon 9, une collerette 28 en saillie radialement vers l'extérieur adaptée à prendre appui sur le joint d'étanchéité 11.

Cette collerette 28 s'évase vers l'extérieur radialement et axialement et se termine par une bride radiale 29 qui prend appui sur le joint d'étanchéité 11, de préférence sans toucher le manchon 9. Le joint 11 est logé dans l'épaulement intérieur 17 ménagé dans l'épaisseur du manchon 9.

La tubulure 8 est de préférence en acier, notamment en acier inoxydable, qui présente le double avantage de résister à la corrosion par les gaz d'échappement et d'avoir pratiquement la conductivité thermique la plus faible parmi tous les métaux utilisables, et la collerette 28 est formée dans le même métal et est soudée en 31 à la tubulure 8.

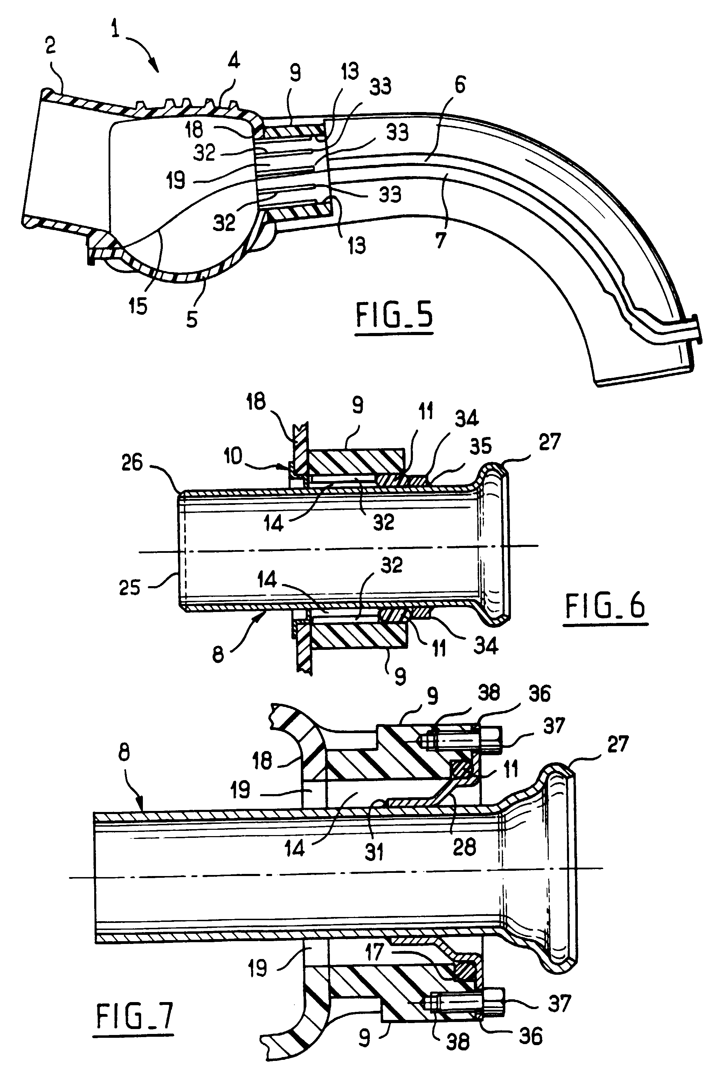

Dans la réalisation représentée aux figures 5 et 6, le manchon 9 présente, sur sa surface périphérique intérieure 13 des éléments formant assise dirigés radialement vers l'intérieur adaptés à servir de butée d'arrêt pour le joint 11 d'étanchéité : dans cet exemple, ces éléments d'assise sont des rainures longitudinales 32 en saillie vers l'intérieur et dont l'extrémité amont 33 sert de butée d'arrêt pour le joint 11.

Dans cet exemple, la tubulure 8 présente sur sa surface périphérique extérieure une simple bague 34 soudée en 35 sur cette tubulure et servant de butée pour le joint 11.

Dans ces deux exemples de réalisation, la tubulure 8 d'arrivée de gaz d'échappement recyclés chauds se trouve sensiblement en face de la tubulure 2 d'arrivée d'air froid. L'air froid peut donc pénétrer, entre les griffes 24, dans l'espace 14 compris entre le manchon 9 et la tubulure 8 ; cet air refroidit ainsi la rondelle 10, le joint 11, crée dans l'espace 14 entre la tubulure 8 et le manchon 9, un coussin d'air isolant qui réduit considérablement les échanges de chaleur par conduction de l'une à l'autre, et renouvelle ce coussin d'air, ce qui réduit également les échanges de chaleur par convection.

On notera que dans le mode de réalisation des figures 2 à 4, l'épaisseur de l'espace 14 est nettement plus importante que celle ménagée dans le mode de réalisation des figures 5 et 6. Dans ce dernier mode, les rainures canalisent axialement l'air froid jusqu'au joint 11 en appui sur leurs extrémités amont 33. Le joint 11 se trouve ainsi plus efficacement refroidi que dans le cas du premier mode décrit.

La mise en place du dispositif selon l'invention apparaît évidente à la lumière de la description ci-dessus. On réalise d'une manière quelconque le collecteur 1, soit directement avec le manchon 9, soit avec un manchon 9 mis en place séparément sur l'ouverture 19 par surmoulage.

On introduit par la tubulure 2 la rondelle 10 que l'on maintient en place sur l'ouverture 19 tandis que l'on introduit de l'autre côté du collecteur 1 le joint 11 et la tubulure 8 qui passe entre les griffes 24. Lorsque la bride 29 ou la bague 34 sont en contact avec le joint 11 lui-même en butée sur l'épaulement 30 ou sur les extrémités 33 des rainures 32, l'élasticité des griffes 24 s'oppose à l'extraction de la tubulure 8.

Dans la réalisation de la figure 7, la tubulure 8 est pourvue d'une collerette 28 se terminant par une bride radiale 36 qui s'étend sensiblement sur toute l'épaisseur du manchon 9. Le joint d'étanchéité 11 s'appuie sur l'épaulement 17. La tubulure 8 est fixée au manchon 9 par des vis 37 qui traversent la bride 36 et sont vissées dans des trous 38 ménagés en direction longitudinale dans l'épaisseur du manchon 9. Cette épaisseur est évidemment définie en conséquence.

L'expérience prouve effectivement que si la dimension de l'espace 14 est suffisante pour permettre un refroidissement correct de la tubulure 8 et de la collerette 28, la température de la bride 36 peut atteindre des niveaux de température supportables par une matière thermoplastique telle que le PPS, compte tenu du taux de recyclage de gaz d'échappement prévu.

Il est néanmoins évident que l'on peut incorporer, entre l'extrémité 16 du manchon 9 et la bride radiale 36, un joint thermiquement isolant (non représenté).

L'ouverture 19 est ainsi totalement ouverte pour l'introduction d'air froid dans l'espace 14, et les vis 38 assurent un guidage suffisamment précis de la tubulure 8 à l'intérieur du manchon 9.

Ainsi, l'invention est applicable à d'autres corps creux qu'un collecteur d'admission d'air, et à d'autres éléments chauds que la tubulure de recyclage de gaz d'échappement chauds recyclés : l'élément chaud peut ainsi être constitué, par exemple, par une bougie ou résistance de réchauffage d'air pour faciliter le démarrage du moteur à froid.

Le collecteur peut comporter plusieurs tubulures d'arrivée d'air froid, plusieurs tubulures d'arrivée de gaz d'échappement recyclés, un nombre quelconque de tubulures de sortie.

La tubulure d'arrivée de gaz d'échappement et la tubulure d'arrivée d'air peuvent être placées dans des positions et suivant des orientations différentes de celles représentées, par rapport au collecteur d'air et l'une par rapport à l'autre.

Bien entendu, ce que l'on a appelé air froid dans la description qui précède est l'air qui arrive du filtre à air, et dont la température peut varier entre des limites extrêmes respectives pouvant atteindre -40°C et +80 ou +90°C environ, cet air constituant de toute façon le fluide "froid" avec lequel se mélangent les gaz d'échappement recyclés qui sont toujours nettement plus chauds.

## Revendications

1. Corps creux (1) comportant au moins une tubulure (2) d'arrivée d'un fluide froid et au moins une tubulure (3a, 3b, 3c, 3d) de sortie de fluide, ainsi qu'un dispositif pour adapter un élément chaud (8) sur ledit corps creux, ledit corps creux (1) étant réalisé en une matière thermoplastique qui ne peut pas supporter la température de l'élément chaud (8), le dispositif comportant un manchon d'arrivée (9) qui entoure ledit élément chaud (8), qui est fixé au corps creux (1) et débouche dans celui-ci par une ouverture (19), et qui est également réalisé en une matière thermoplastique, des moyens (10, 28) de retenue pour maintenir l'élément chaud (8) à l'intérieur du manchon d'arrivée (9) hors de contact avec celui-ci, des moyens d'étanchéité (11) disposés entre la surface périphérique extérieure (12) de l'élément chaud (8) et la surface périphérique intérieure (13) du manchon (9), et des moyens pour refroidir l'espace (14) compris entre le manchon (9) et l'élément chaud (8), caractérisé en ce que le manchon (9) est séparé de la tubulure (2), ou des tubulures, d'arrivée de fluide froid, en ce que, l'espace (14) compris entre la surface périphérique extérieure (12) de l'élément chaud (8) et la surface périphérique intérieure (13) du manchon (9) est un espace en cul-de-sac, en ce que le corps creux comporte en outre des moyens pour envoyer dans l'espace en cul-de-sac (14), par l'ouverture (19), depuis l'intérieur du corps creux (1), une partie du fluide froid ayant pénétré dans le corps creux (1) par ladite tubulure (2), et en ce que l'espace (14) a une dimension prédéterminée telle que ladite partie du fluide froid assure un refroidissement correct de la tubulure (8) et des moyens de retenue (10, 28).

2. Corps creux conforme à la revendication 1, caractérisé en ce que les moyens de retenue comprennent un élément (10) qui est adapté à prendre appui sur la paroi intérieure (18) du corps creux (1) le long du bord périphérique de l'ouverture (19) sur laquelle se raccorde le manchon (9), et qui comporte des languettes (24) en saillie radialement vers l'intérieur pour guider et retenir l'élément chaud (8).

3. Corps creux conforme à la revendication 2, caractérisé en ce que les languettes (24) sont adaptées à faire office de griffes et à s'opposer élastiquement à un retrait de l'élément chaud (8).

4. Corps creux conforme à l'une des revendications 1 à 3, caractérisé en ce que le manchon (9) est réalisé d'une seule pièce avec le corps creux (1).

5. Corps creux conforme à l'une des revendications 1 à 4, caractérisé en ce que l'élément chaud (8) présente sur sa surface périphérique extérieure (12), au niveau de son entrée dans le manchon (9), des éléments (28, 34, 36) en saillie radialement vers l'extérieur adaptés à prendre appui sur les moyens d'étanchéité (11).

6. Corps creux conforme à l'une des revendications 1 à 5, caractérisé en ce que le manchon (9) présente sur sa surface périphérique intérieure des éléments (32, 33) formant assise adaptés à servir de butée d'arrêt pour les moyens d'étanchéité (11).

7. Corps creux conforme à la revendication 6, caractérisé en ce que les éléments formant assise sont des rainures longitudinales (32) en saillie vers l'intérieur et dont l'extrémité amont (33) sert de butée d'arrêt pour les moyens d'étanchéité (11).

8. Corps creux conforme à l'une quelconque des revendications 1 à 7, caractérisé en ce que l'élément chaud (8) est une tubulure d'arrivée de fluide chaud à l'intérieur du corps creux (1), la matière thermoplastique du corps creux étant capable de supporter la température du mélange des fluides froid et chaud.

9. Corps creux conforme à l'une des revendications 1 à 8, caratérisé en ce que la tubulure (2) d'arrivée de fluide froid est située sensiblement en face de l'élément chaud (8).

10. Corps creux conforme à l'une quelconque des revendications 1 à 9, caractérisé en ce que ce corps creux (1) est un collecteur d'admission d'air pour moteur à explosion comportant au moins une tubulure (2) d'arrivée d'air frais et plusieurs tubulures (3a, 3b, 3c, 3d) de sortie d'air adaptées à diriger de l'air vers les différents cylindres du moteur.

11. Corps creux conforme à la revendication 10, caractérisé en ce que ledit collecteur (1) reçoit au moins une tubulure (8) d'arrivée de gaz d'échappement chauds recyclés.

## Patentansprüche

1. Hohler Körper (1) mit wenigstens einem Einlaßstutzen (2) für ein kaltes Fluid und wenigstens einem Auslaßstutzen (3a, 3b, 3c, 3d) für das Fluid, und mit einer Vorrichtung zur Anbringung eines warmen Elementes (8) an dem hohlen Körper, wobei der hohle Körper (1) aus einem thermoplastischen Material hergestellt ist, das die Temperatur des warmen Elements (8) nicht aushalten kann, wobei die Vorrichtung eine Einlaßmuffe (9) umfaßt, die das warme Element (8) umgibt, die an dem hohlen Körper (1) befestigt ist und in diesen durch eine Öffnung (19) mündet, und die in gleicher Weise aus einem thermoplastischen Material hergestellt ist, mit Haltemitteln (10, 28), um das warme Element (8) im Innenraum der Einlaßmuffe (9) außer Kontakt von dieser zu halten, Dichtungsmitteln (11), die zwischen der Außenumfangsfläche des warmen Elements (8) und der Innenumfangsfläche (13) der Muffe (9) angeordnet sind, und Mitteln, um den zwischenraum (14) zwischen der Muffe (9) und dem warmen Element (8) zu kühlen, dadurch gekennzeichnet, daß die Muffe (9) von dem Einlaßstutzen (2) oder von den Einlaßstutzen für kaltes Fluid getrennt ist, daß der Zwischenraum (14) zwischen der Außenumfangsfläche (12) des warmen Elements (8) und der Innenumfangsfläche (13) der Muffe (9) ein Sackgassenraum ist, daß der hohle Körper außerdem Mittel umfaßt, um in den Sackgassenraum (14) durch die Öffnung (19) von dem Innenraum des hohlen Körpers (1) aus einen Teil des kalten Fluids einzubringen, das in den hohlen Körper (1) durch den Stutzen (2) eingebracht worden ist, und daß der Raum (14) eine vorgegebene Abmessung hat, derart, daß der Teil des kalten Fluids eine korrekte Kühlung des Stutzens (8) und der Haltemittel (10, 28) gewährleistet.

2. Hohler Körper nach Anspruch 1, dadurch gekennzeichnet, daß die Haltemittel ein Element (10) umfassen, das geeignet ist, sich an der Innenwand (18) des hohlen Körpers (1) entlang der Umfangskante der Öffnung (19), mit der die Muffe (9) verbunden ist, abzustützen, und das Zungen (24) aufweist, die radial in Richtung des Innenraums abragen, um das warme Element (8) zu führen und zu halten.

3. Hohler Körper nach Anspruch 2, dadurch gekennzeichnet, daß die Zungen (24) geeignet sind, Arbeit von Greifelementen zu übernehmen und sich elastisch einem Zurückziehen des warmen Elements (9) entgegenzusetzen.

4. Hohler Körper nach einem der Ansprüche 1 bis 3, dadurch gekennzeichnet, daß die Muffe (9) aus einem einzigen Stück mit dem hohlen Körper (1) realisiert ist.

5. Hohler Körper nach einem der Ansprüche 1 bis 4, dadurch gekennzeichnet, daß das warme Element an seiner Außenumfangsfläche (12) auf der Höhe seines Eingangs in der Muffe (9) radial in Richtung nach außen vorstehende Elemente (28, 34, 36) aufweist, die geeignet sind, an den Dichtungsmitteln (11) anzuliegen.

6. Hohler Körper nach einem der Ansprüche 1 bis 5, dadurch gekennzeichnet, daß die Muffe (9) an ihrer Innenumfangsfläche Elemente (32, 33), die eine Stufe bilden, aufweist, die in der Lage sind, als Anschlag für die Dichtungsmittel (11) zu dienen.

7. Hohler Körper nach Anspruch 6, dadurch gekennzeichnet, daß die eine Stufe bildenden Elemente Längsnuten (32) sind, die in Richtung des Innenraums vorstehen und deren außen liegendes Ende (33) als Anschlag für die Dichtungsmittel (11) dient.

8. Hohler Körper nach einem der Ansprüche 1 bis 7, dadurch gekennzeichnet, daß das warme Element (8) ein Einlaßstutzen für ein warmes Fluid zum Innenraum des hohlen Körpers (1) ist, wobei das thermoplastische Material des hohlen Körpers in der Lage ist, die Mischtemperatur der kalten und warmen Fluide zu ertragen.

9. Hohler Körper nach einem der Ansprüche 1 bis 8, dadurch gekennzeichnet, daß der Einlaßstutzen (2) für kalte Flüssigkeit etwa gegenüberliegend von dem warmen Element (8) angeordnet ist.

10. Hohler Körper nach einem der Ansprüche 1 bis 9, dadurch gekennzeichnet, daß der hohle Körper (1) ein Luftansaugkrümmer für einen Explosionsmotor mit wenigstens einem Einlaßstutzen (2) für frische Luft und mehreren Luftauslaßstutzen (3a, 3b, 3c, 3d), die geeignet sind, die Luft zu verschiedenen Zylindern des Motors zu führen, ist.

11. Hohler Körper nach Anspruch 10, dadurch gekennzeichnet, daß der Krümmer (1) wenigstens einen Einlaßstutzen (8) für zurückgeführte warme Abgase aufnimmt.

## Claims

1. Hollow body (1) comprising at least one cold fluid inlet nozzle (2) and at least one fluid outlet nozzle (3a, 3b, 3c, 3d), as well as a device for adapting a hot element (8) to said hollow body, said hollow body (1) being produced from a thermoplastic material which cannot withstand the temperature of the hot element (8), the device comprising an inlet sleeve (9) which surrounds the hot element (8), is fixed to the hollow body (1) and opens therein through an orifice (19) and is also produced from a thermoplastic material, retention means (10, 28) for holding the hot element (8) inside the inlet sleeve (9) out of contact therewith, sealing means (11) arranged between the external peripheral surface (12) of the hot element (8) and the internal peripheral surface (13) of the sleeve (9), and means for cooling the space (14) between the sleeve (9) and the hot element (8), characterized in that the sleeve (9) is separated from the cold fluid inlet nozzle (2) or nozzles, in that the space (14) between the external peripheral surface (12) of the hot element (8) and the internal peripheral surface (13) of the sleeve (9) has a dead end, in that the hollow body also comprises means for transmitting into the dead-end space (14), through the orifice (19), from the interior of the hollow body (1), a proportion of the cold fluid which has penetrated the hollow body (1) through said nozzle (2) and in that the space (14) has dimensions which are predetermined such that said proportion of the cold fluid ensures correct cooling of the nozzle (8) and of the retention means (10, 28).

2. Hollow body according to claim 1, characterized in that the retention means comprise an element (10) which is adapted to rest on the internal wall (18) of the hollow body (1) along the peripheral edge of the orifice (19) to which the sleeve (9) is connected and which comprises tongues (24) which project radially inwardly to guide and retain the hot element (8).

3. Hollow body according to claim 2, characterized in that the tongues (24) are adapted to act as claws and elastically to oppose retraction of the hot element (8).

4. Hollow body according to one of claims 1 to 3, characterized in that the sleeve (9) is produced integrally with the hollow body (1).

5. Hollow body according to one of claims 1 to 4, characterized in that the hot element (8) has, on its external peripheral surface (12), in the region of its entrance into the sleeve (9), elements (28, 34, 36) which project radially outwardly and are adapted to rest on the sealing means (11).

6. Hollow body according to one of claims 1 to 5, characterized in that the sleeve (9) has, on its internal peripheral surface, elements (32, 33) acting as a support and adapted to act as an abutment for the sealing means (11).

7. Hollow body according to claim 6, characterized in that the elements forming a support are inwardly projecting longitudinal grooves (32) of which the upstream end (33) acts as an abutment for the sealing means (11).

8. Hollow body according to any one of claims 1 to 7, characterized in that the hot element (8) is a hot fluid inlet nozzle inside the hollow body (1), the thermoplastic material of the hollow body being capable of withstanding the temperature of the mixture of cold and hot fluids.

9. Hollow body according to one of claims 1 to 8, characterized in that the cold fluid inlet nozzle (2) is located substantially opposite the hot element (8).

10. Hollow body according to any one of claims 1 to 9, characterized in that this hollow body (1) is an air intake manifold for an internal combustion engine comprising at least one cool air inlet nozzle (2) and a plurality of air outlet nozzles (3a, 3b, 3c, 3d) adapted to direct the air toward the various cylinders of the engine.

11. Hollow body according to claim 10, characterized in that said manifold (1) receives at least one inlet nozzle (8) for recycled hot exhaust gases.
